(19) **Europäisches Patentamt European Patent Office Office européen des brevets**

(11) **EP 1 579 128 B1**

(12) **EUROPEAN PATENT SPECIFICATION**

(45) Date of publication and mention of the grant of the patent:
**22.08.2007 Bulletin 2007/34**

(51) Int Cl.:
*F16H 61/662* (2006.01)    *B60W 10/06* (2006.01)
*B60W 10/10* (2006.01)

(21) Application number: **03813597.6**

(22) Date of filing: **19.12.2003**

(86) International application number:
**PCT/EP2003/014803**

(87) International publication number:
**WO 2004/057216 (08.07.2004 Gazette 2004/28)**

(54) **METHOD FOR OPERATING A CONTINUOUSLY VARIABLE TRANSMISSION**

VERFAHREN ZUR BETÄTIGUNG EINES STUFENLOSEN GETRIEBES

PROCEDE DE FONCTIONNEMENT D'UNE TRANSMISSION CONTINUELLEMENT VARIABLE

(84) Designated Contracting States:
**AT BE BG CH CY CZ DE DK EE ES FI FR GB GR HU IE IT LI LU MC NL PT RO SE SI SK TR**

(30) Priority: **23.12.2002 NL 1022242**
**23.12.2002 NL 1022241**

(43) Date of publication of application:
**28.09.2005 Bulletin 2005/39**

(60) Divisional application:
**07109422.1 / 1 818 572**

(73) Proprietor: **Van Doorne's Transmissie B.V.**
**5000 AM Tilburg (NL)**

(72) Inventors:
• **VAN DER LAAN, Maaike**
  **NL-5018 EA Tilburg (NL)**
• **VAN DROGEN, Mark**
  **NL-5021 EJ Tilburg (NL)**

(74) Representative: **Plevier, Gabriel Anton Johan Maria**
**Van Doorne's Transmissie B.V.,**
**Patents Department,**
**Postbus 500**
**5000 AM Tilburg (NL)**

(56) References cited:
DE-A- 10 130 057    DE-A- 10 225 285
US-A- 5 556 346     US-A- 6 050 912
US-A1- 2001 049 315  US-B1- 6 436 004

**Description**

The present invention relates to a method for operating a continuously variable transmission as described in the preamble of Claim 1.

A transmission of this type is generally known, for example from EP-A 1 167 839 in the name of the present Applicant. In this type of transmissions, which are based on friction and clamping force, a minimum force is required by which the discs clamp the drive belt in order to enable the latter to transmit a rotation from one pulley to the other. In this context, a minimum axial clamping force Fax-min required, which is applied to the drive belt by one pulley and is necessary in order for a torque which is supplied to be passed on at least virtually without slip between the belt and the pulley, is in practice often calculated from the torque T supplied times the cosine of half an angle $\phi$ defined between the tapering pulley discs divided by the product of twice a running radius R of the drive belt between the discs of a pulley and an empirically defined torque transmission coefficient t:

$$\text{Fax-min} = (T \bullet \cos(\tfrac{1}{2}\phi)) \,/\, (2 \bullet R \bullet \tau) \tag{1}$$

In this equation, in practice the coefficient of friction $\mu$ in the contact between drive belt and pulley is often substituted for the torque transmission coefficient $\tau$. Equation (1) can be considered a good approximation.

The value for the minimum clamping force Fax-min required which has been determined in this way in principle applies to both pulleys, but to maintain a constant transmission ratio it may be necessary for the clamping force on one of the two pulleys to be selected to be higher still. Also, to enable the transmission to shift, different clamping forces may be required, or at least a different ratio between the clamping forces of the respective pulleys. However, the above-mentioned minimum clamping force Fax-min required always applies to at least one of the two pulleys, with a higher clamping force on the drive belt then being applied at the other pulley in order to achieve the desired transmission ratio or a desired speed of a change therein.

The clamping force Fax which is to be applied is in turn generally defined as the minimum axial clamping force Fax-min required times a safety factor Sf:

$$\text{Fax} = \text{Sf} \bullet \text{Fax-min} \tag{2}$$

The safety factor Sf takes account, for example, of any inaccuracy in the calculation of the minimum clamping force Fax-min required.

An operating method of this type is in general use and is known, for example, from Patent Publication EP-A 1 218 654, in the name of the present Applicant. The general aim in this context is for the clamping force applied to the drive belt to be as low as possible in relation to the torque supplied, i.e. to use a safety factor which is as low as possible. The reason for this is that the lower the clamping force, the better the efficiency of the transmission. For example, the friction losses will be lower and the power taken up to generate the clamping forces is lower. Also, a lower clamping force is also better for the service life of the belt. However, in the case of clamping forces which are only just above the minimum force required, i.e. just above the clamping force at which slip may occur between pulley and drive, there is a relatively high risk of drive belt slip, for example on account of an unexpected change in torque taken up by the load or the above-mentioned inaccuracy in the calculation of the minimum clamping force Fax-min required. According to the prior art, however, drive belt slip must in principle be avoided in order to ensure the robustness and optimum efficiency of the transmission, since drive slip by definition leads to a loss of power and moreover may result in excessive wear.

Therefore, in the known transmission, a value of 1.3 or above is typically used for the safety factor. Alternatively, there are additional known measures which can be used to avoid the occurrence of drive belt slip even with a relatively low safety factor. For example, it is known from European Patent EP-A 1 069 331 to actuate a clutch in a drive line in which the transmission is incorporated in such a manner that it slips at a lower torque level than the drive belt. This is because once the clutch slips, the torque supplied cannot rise or can scarcely rise further, and any excess power is dissipated by the clutch. Another alternative solution is given by the prior art document mentioned first, in which the clamping force is selectively reduced, i.e. the safety factor is selectively reduced as a function of circumstances. Such lowering in this case takes place on the basis that changes in torque which is to be transmitted, whether they are initiated by the internal combustion engine or by circumstances at the load, in relative terms become lower as torque levels increase.

Therefore, it is an object of the present invention to provide a method for operating the continuously variable transmission which allows the efficiency or robustness of the transmission to be improved, in particular by using a relatively low safety factor, which method can advantageously be used independently of the known additional measures.

According to a new insight, on which the invention is based, a drive belt can be repeatedly, and under certain circumstances even continuously, subjected to a relatively considerable degree of slip without suffering fatal damage, i.e. without the normal operation of the transmission being adversely affected. This contrasts with previous technical insights, according to which complete slippage of the belt with respect to the pulleys should in principle be limited as much as possible or even avoided altogether.

According to the invention, it is in this case advantageously possible to use a slip characteristic in which it is determined, for the transmission ratios of the transmission and as a function of the axial clamping force and the respective tangential slip rate between the pulley and the drive belt, whether damage, whether fatal or otherwise, to the belt or pulley occurs under these defined conditions, with what is known as a damage line indicating the transition or boundary between these states. A slip characteristic of this type shows that the transmission is under all circumstances to some degree resistant to the above-mentioned drive belt slip, and that in particular it is even possible to permit a considerable slip rate at a relatively low clamping force or relatively high transmission ratio (which is defined as the ratio between the output rotational speed and the input rotational speed of the transmission).

On the basis of this slip characteristic and the new insight derived therefrom, the invention proposes a first novel method, which is based on the known operating method for the clamping force, which makes advantageous use of the said slip between the drive belt and a pulley. The method according to the invention is given in Claim 1 and is characterised by an adaptive approach, in which at least one parameter of the operation of the transmission is updated during normal operation of the transmission. This method has the advantage that the operation of the transmission over time can be optimum with regard to the efficiency and robustness aspects. By way of example, the influence of wear on the maximum transmission efficiency can be considerably limited.

In a further refinement of the method according to the invention, the torque transmission coefficient $\tau$ from equation (1) is used for the above-mentioned operating parameter. Updating this parameter to its actual value means that the relationship between the torque T supplied and the minimum clamping force Fax-min required is always accurately known, so that under certain circumstances a relatively low safety factor Sf can advantageously be used in the calculation of the clamping force Fax to be applied in accordance with equation (2). According to the invention, the safety factor Sf may, for example, have a value of between 1.3 and 1. As has already been stated, a low safety factor Sf benefits the efficiency of the transmission. The method according to the invention also has the advantage that inaccuracies, i.e. systematic errors which may occur during determination of the running radius R, the actual application of the desired clamping force Fax and the torque T supplied are taken into account in the torque transmission coefficient $\tau$.

According to the invention, the actual torque transmission coefficient $\tau$ is determined by lowering the clamping force Fax in the adaptation phase until the above-mentioned degree of drive belt slip S is detected. The actual, i.e. current value of the torque transmission coefficient $\tau$ can be accurately determined using equation (1), or in a similar way, from the clamping force level Fax-slip prevailing under these circumstances:

$$\tau = (T \cdot \cos(\lambda)) \,/\, (2 \cdot R \cdot Fax\text{-}slip) \qquad\qquad (3)$$

In this case, the level of the axial clamping force Fax-slip at which drive belt slip actually occurs is of course slightly lower than the minimum level of the axial clamping force at which no slip occurs. With a sufficiently high safety factor Sf, for example with a value of greater than 1.1, however, this difference falls within the safety margin, and the two clamping force levels can, however, be approximately equated to one another. Alternatively, it is possible for the determined level of clamping force level Fax-slip or the torque transmission coefficient $\tau$ determined using equation (3) to be increased by a defined factor.

In yet a further refinement of the method according to the invention, the above-mentioned adaptation phase is carried out while the transmission ratio of the transmission is at its highest value, i.e. the overdrive ratio, or at its lowest value, i.e. the low ratio. This is because it is customary for at least one of the axially displaceable discs of the pulleys to be positioned against a stop in these transmission ratios, so that the geometric transmission ratio GR of the transmission and therefore also the running radius R from equation (3) has a fixed and known value. Any difference between this geometric transmission ratio GR and the actual measured transmission ratio $\omega_{OUT}/\omega_{IN}$, i.e. the quotient of the rotational speeds $\omega_{OUT}, \omega_{IN}$ of the two pulleys, then indicates a defined value for the drive belt slip S. According to the invention, the drive belt slip S can be defined as follows:

$$S = (1 - ((\omega_{OUT}/\omega_{IN}) \,/\, GR)) \cdot 100\% \qquad\qquad (4)$$

It is also possible for the absolute value of the drive belt slip to be used in metres per second.

Since some slip, known as the micro-slip, inevitably occurs in the frictional contact between drive belt and pulley, the said difference between the geometric transmission ratio and the actual transmission ratio must exceed a certain value before, in accordance with the present invention, it is possible to speak of drive belt slip, i.e. macro-slip. In the definition given by equation (4), the slip is in the form of macro-slip if the drive belt slip S is in the order of magnitude of percent.

It should be noted that in the event of drive belt slip the measured transmission ratio is always lower than the geometric transmission ratio, and consequently in the low ratio the occurrence of drive belt slip can be reliably recorded if the measured transmission ratio adopts a value which is lower than the lowest possible geometric transmission ratio, i.e. the low ratio.

In any other geometric transmission ratio of the transmission, i.e. a transmission ratio between the low ratio and the overdrive ratio, this cannot be detected without additional detection means. Nevertheless, according to the invention it is also possible to use a refinement of the method for the operation of the transmission in which the transmission is equipped with detection means for determining the geometric transmission ratio. Various detection means which are suitable for this purpose are known from the prior art, such as a drive belt speed-measuring device for determining the circumferential velocity of the drive belt, from which the running radius of the drive belt can be calculated, a pulley disc position sensor for determining the distance between the discs of a pulley, from which once again the running radius of the drive belt can be calculated, or a drive belt position sensor for directly determining the running radius of the drive belt. In an embodiment in which the geometrically defined transmission ratio GR is determined using the above-mentioned pulley disc position sensor, according to a further aspect of the invention, the accuracy of a sensor of this type is optimised by orienting it to the axle of the pulley instead of to the outermost running radius of a pulley disc. This solves the problem of less accurate signals resulting from deformation of a pulley disc which is under pressure from a normal force. Another solution to this problem in accordance with the invention is formed by the use of a characteristic diagram which therefore includes the geometrically defined transmission ratio in relation to one or more parameters such as an axial position of the displaceable pulley disc, a rotational speed of the pulley, the torque supplied and the clamping force. The above-mentioned deformation can be taken into account in advance in a characteristic diagram of this type.

On the basis of this slip characteristic and the new insight derived therefrom, the invention further proposes a second novel method which is based on the known operating method for the clamping force and in which advantageous use of the above-mentioned slip between the drive belt and a pulley is made. The method according to the invention is given in Claim 11 and is characterised in that, when the transmission is operating, the degree of drive belt slip which slip occurs between pulley and drive belt is detected by the electronic operating unit with the aid of slip-detection means, and in that the operating unit, when the transmission is operating, takes measures to reduce the degree of slip if it exceeds a critical limit, by emitting operating signals to relevant components of the transmission.

Since some slip inevitably occurs in the frictional contact between drive belt and pulley, the drive belt slip S has to exceed a certain value, in this case referred to as the critical limit, before it is possible to speak of excessive drive belt slip in the context of the present invention. The critical limit is in this case, for example, empirically determined and is related, for example, to the maximum permissible drive belt slip in accordance with the slip characteristic.

On the basis of the novel insight described in the above, in a further refinement of the invention an operating method for the transmission which is known per se is made adaptive, in such a manner that the starting point is a $Sf/\tau$ factor (safety factor/torque transmission coefficient) from the combination of equations (1) and (2) with a safety factor Sf which is slightly greater than 1, for example 1.3, or in a particular case even equal to 1. Each time the critical limit for the drive belt slip is exceeded as referred to above, the value for the $Sf/\tau$ factor is adapted, in this case increased, so that the value for the clamping force Fax to be applied, which has been calculated by the operating unit, becomes higher. With a method of this type and with this execution of the operating method, a number of variable parameters are advantageously taken into account, namely an inaccuracy in the determination of the torque supplied by the engine, an inaccuracy in the determination of the running radius, and various parameters which change over the course of time as a result of wear, degeneration and replenishment of lubricating oil, as well as the inaccuracy in any determination of the pinching force, for example on account of properties of a pressure sensor. There is also a risk of excessive drive belt slip on account of external and/or unpredictable variations in the torque supplied. Furthermore, the $Sf/\tau$ factor, after it has previously been increased, can be slowly brought back down to its original value.

According to a further refinement of the invention, the torque transmission coefficient $\tau$ from the $Sf/\tau$ factor is adapted and the safety factor Sf has a value in a range between 1.3 and 1, preferably 1.1. Alternatively, the safety factor Sf can be determined as a function of the maximum permissible degree of the drive belt slip S for the instantaneous transmission ratio of the transmission and the above-mentioned axial clamping force Fax, in accordance with the slip characteristic, i.e. a higher safety factor is used under circumstances in which the slip characteristic indicates that the transmission is less able to withstand the drive belt slip S, such as for example in the lowest transmission ratio at a high torque T, i.e. a high axial clamping force Fax which is to be applied, and vice versa. This has the advantage that there is always sufficient space and/or time available to reduce any excessive drive belt slip S before the maximum permissible value for this slip is reached.

According to the invention, it is also possible to provide the operating unit with memory means in which, in the event of excessive drive belt slip of this nature occurring, the value of one or more parameters is stored, which parameters are characteristic of the circumstances under which the drive belt slip occurs, such as for example the torque supplied, the transmission ratio, the temperature of the transmission, the road conditions and the driving characteristics of a driver of a motor vehicle in which the transmission is used. It is then possible, if identical circumstances occur again at a subsequent stage when the transmission is operating, to increase the $Sf/\tau$ factor as a preventative measure, i.e. even before the excessive drive belt slip has occurred. Alternatively, in the operating method according to the invention it is possible to permanently increase, increase to a greater extent and/or reduce more slowly the $Sf/\tau$ factor in response to the critical limit of the drive belt slip being repeatedly exceeded, in particular under specific circumstances.

The invention furthermore provides additional means to limit excessive drive belt slip S to the maximum possible extent and as quickly as possible, in order also to avoid possible damage as a result. Means of this type are relevant for example, although not exclusively, if the clamping force Fax calculated by the operating unit were to be above a maximum achievable or permissible value. According to the invention, additional means of this type may be suitable for rapid, possibly temporary, adjustment of the clamping force Fax, such as a pressure accumulator in the case of a hydraulically generated clamping force Fax, so that this force can be increased relatively quickly in response to the drive belt slip. Alternatively, the additional means may be suitable for relatively rapidly reducing the clamping force Fax, in order to limit a power which is dissipated in the frictional contact between drive belt and pulley disc to the maximum possible extent, the latter preferably in combination with a reduction in the torque supplied, for example realised by at least partially opening a clutch in the drive line between an engine and the transmission, which measure can also be used independently in order to counteract drive belt slip, or by limiting the torque and/or rotational speed generated by the engine, and/or limiting the speed with which the transmission ratio of the transmission can be changed. The extent to which the said additional means are active may, according to the invention, be linked to the seriousness of the drive belt slip, i.e. how close it has come to the maximum permissible drive belt slip in accordance with the slip characteristic.

It should be noted that the novel insight on which the invention is based involves not only optimising the efficiency and/or increasing the robustness of the transmission, but also aims to save on the cost price, for example as a result of the transmission not being provided with means for determining the actual clamping force and feeding it back to the transmission operation.

In an advantageously simple refinement of the invention, the slip-detection means are only effective while the transmission ratio of the transmission is at its highest value, i.e. the overdrive ratio, and/or its lowest value, i.e. the low ratio. This is because it is customary for at least one of the axially displaceable discs of the pulleys to be positioned against a stop in these transmission ratios, so that the geometrically defined transmission ratio GR of the transmission and therefore also the running radius R from Equation (3) has a fixed and known value.

Finally, according to the invention it is advantageous to relate the transmission parameter which has been adapted in accordance with the present invention, such as the $Sf/\tau$ factor, to a predetermined nominal value or range of values for this factor. This procedure provides for numerous additional operating options for the transmission. For example, it is possible, if the transmission parameter is outside the fixed nominal range, to signal the need for servicing work, such as an oil change, to the user of the transmission.

The invention will now be explained in more detail, by way of example, on the basis of a drawing, in which:

Figure 1 diagrammatically depicts part of a continuously variable transmission with drive belt and pulleys;
Figure 2 shows an illustration of the insight in accordance with the invention in the form of what is known as a slip characteristic determined for the present transmission; and
Figure 3 shows an example of what is known as a traction curve for the present transmission.

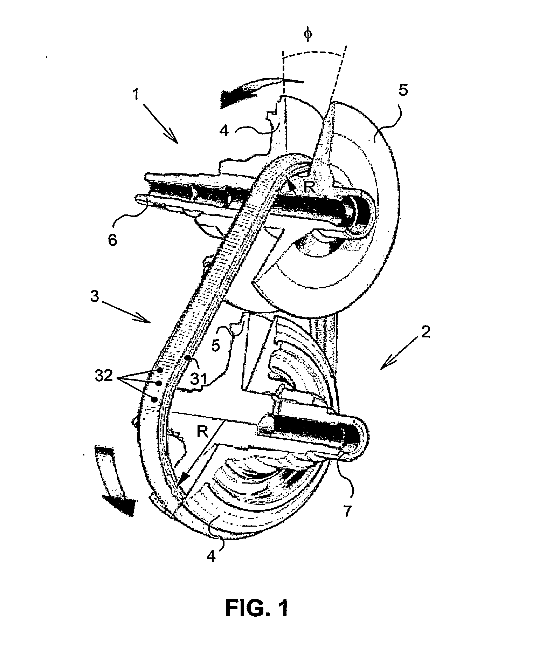

Figure 1 shows the central parts of a continuously variable transmission as is used in the drive of, for example, passenger cars. The transmission per se is generally known and comprises a first and second pulley 1 and 2, each comprising two pulley discs 4, 5, between which there is a drive belt 3. The pulley discs 4, 5 are shaped conically, and at least one disc 4 of a pulley 1, 2 can be displaced in the axial direction along a respective axle 6, 7 on which the discs 4, 5 are mounted. The transmission also includes activation means, which are not shown in the figure and can generally be controlled electronically and act hydraulically so that they can apply an axial force Fax to the above-mentioned one disc 4, in such a manner that the drive belt 3 is clamped between the respective discs 4, 5 and the driving force of an axle 6, 7, i.e. a torque T supplied, is transmitted between the pulleys 1, 2 by means of friction in the conical contact surface between the discs 4, 5 and the drive belt 3. In accordance with equation (1), the axial clamping force Fax-min required for this purpose is determined using the torque T supplied, a contact angle of the said contact surface with the radial direction, i.e. half an angle $\phi$ defined between the tapering pulley discs, a running radius R of the drive belt 3 and a torque transmission coefficient $\tau$.

However, the value for the minimum axial clamping force Fax-min required, which has been determined with the aid of equation (1) is to a certain extent inaccurate on account of possible deviations between the value for the torque T supplied and for the running radius R, which has been recorded for the clamping force determination, and the actual value of these parameters. Moreover, in practice there is often also an unknown difference between the desired value for the axial clamping force Fax to be applied by the activation means and the clamping force which is actually present. The above-mentioned inaccuracies and uncertainties mean that the desired value for the axial clamping force Fax is selected to be slightly higher than the minimum clamping force Fax-min required, in particular by multiplying the latter by a safety factor Sf in accordance with equation (2).

The drive belt 3 shown in Figure 1 comprises a few endless metal support elements 31, each comprising a set of nested thin metal rings which form a carrier for a series of metal transverse elements 32 which absorb the clamping forces exerted between the discs 4, 5 of a pulley 1, 2 and which are moved over the carrier elements 31, pushing one another, towards a driven pulley 2 as a result of a rotation of a driving pulley 1. A drive belt of this type is also known as the Van Doorne pushbelt and is described in more detail in, for example, European Patent EP-A 0 626 526.

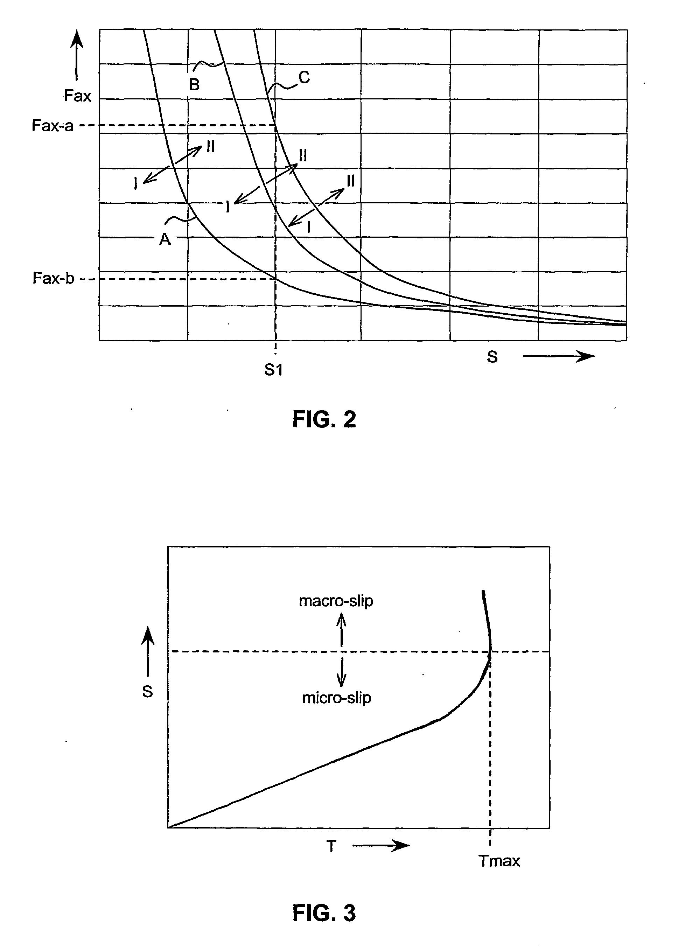

According to the insight on which the present invention is based, this type of drive belt 3 is at least to some extent able to withstand slippage between the pulley 1, 2 and the belt 3, i.e. drive belt slip S. In this context, what is known as a slip characteristic can be used as a starting point for the efforts to optimise robustness and efficiency of the continuously variable transmission, on which the invention is based. Figure 2 shows an example of a slip characteristic of this type, in which it is defined, for the geometric transmission ratios of the transmission and as a function of the axial clamping force Fax and the absolute degree of drive belt slip S, whether damage, whether fatal or otherwise, to the drive belt 3 or the pulley 1, 2 occurs under these defined conditions. The curves or damage lines A, B and C in Figure 2 in this case indicate, for a defined geometric transmission ratio, the maximum permissible value for the drive belt slip S, beneath which, indicated by arrows I, this fatal damage does not occur and above which, indicated by arrows II, this fatal damage does occur. According to an idea on which the invention is based, adhesive wear occurs as a result of slip when, for a defined combination of a force Fax applied to the drive belt by a pulley disc and a slip speed between these two components, i.e. the degree of drive belt slip S, a maximum value therefor is exceeded.

However, it can be seen from the slip characteristic that the transmission is at least to some extent able to withstand the drive belt slip S. Figure 2 also shows that the maximum degree A of drive belt slip S is reached more quickly in the low ratio than this maximum value C in the overdrive ratio, i.e. for the same degree of drive belt slip S1, damage occurs to the drive belt or pulley at a lower level of the axial clamping force Fax-a in the low ratio compared, for example, to the critical level of the clamping force Fax-b in the overdrive ratio, or in other words for a constant level of the axial clamping force Fax, a lower level of drive belt slip S can be deemed acceptable in the low ratio compared to the overdrive ratio. The damage line B relates to a transmission ratio between the low ratio and the overdrive ratio.

Based on the discovery of this phenomenon and the detailed quantification in its slip characteristic, a first novel operating method for the continuously variable transmission has now been developed, based on any known operating method for determining the axial clamping force Fax to which is added what is known as an adaptation phase, in which at least the current level Fax-slip of the axial clamping force is determined, macro-slip between drive belt 3 and pulley 1, 2 occurring at a given transmission ratio GR and torque T and relating the current value of an operating parameter to this level Fax-slip. According to the invention, the above-mentioned macro-slip in the absolute sense preferably has a value in a range between 0.5 and 2 m/s, in particular between 1 and 1.5 m/s.

For clarity, Figure 3 uses what is known as a traction curve to illustrate the difference between micro-slip and macro-slip in accordance with the invention. This figure plots the drive belt slip S as a function of the torque T supplied for a given transmission ratio, in this case the overdrive ratio, and a given axial clamping force Fax. It can be seen from Figure 3 that in principle the drive belt slip S increases with the torque level T up to a maximum torque level Tmax. According to the invention, this type of drive belt slip S is defined as micro-slip. Although the drive belt slip S does increase further beyond the maximum torque level Tmax, the torque transmitted remains virtually constant or even decreases slightly. According to the invention, this type of drive belt slip S is defined as macro-slip.

According to a preferred embodiment of the invention, during normal operation and at least with a transmission ratio which remains constant, the clamping force Fax required is calculated on the basis of equation (1), and in the adaptation phase the current value of the torque transmission coefficient $\tau$ is determined on the basis of equation (3) by lowering the clamping force until drive belt slip occurs.

According to yet another preferred embodiment of the invention, during normal operation 6, the axial clamping force Fax to be applied to the drive belt 3 by a pulley 1 or 2 is determined by multiplying the minimum level Fax-min required for this force by a safety factor Sf, the value of which is related to the value for the drive belt slip S which is permissible for the instantaneous transmission ratio of the transmission and the said axial clamping force Fax in accordance with the slip characteristic, i.e. a higher safety factor is used under circumstances in which the slip characteristic indicates that the transmission is less able to withstand the drive belt slip S, such as for example in the low ratio at a high torque T or a high axial clamping force Fax which is to be applied, and vice versa.

According to the invention, the adaptation phase can take place cyclically, for example every 10 minutes when the transmission is operating, anti-cyclically, for example each time its operation is initiated, or on the basis of a combination of the two. In the latter case, the adaptation phase may, for example, be performed each time the overdrive ratio is reached and then every 10 minutes. Of course, in this context numerous possible strategies are conceivable.

Finally, according to the invention it is advantageous for certain transmission parameters, such as for example the actual torque transmission coefficient $\tau$, to be related, during the adaptation phase, to a predetermined nominal value or range of values for this coefficient. This procedure provides numerous additional operating options for the transmission. For example, it is possible, if the actual torque transmission coefficient $\tau$ is outside the defined nominal range, to at least temporarily replace the method for operating the transmission during normal operation with a safe method in which, for example, the torque supplied is limited or in which a relatively high safety factor is used. Also, in such a case it is possible to signal the need for maintenance work, such as an oil change, to the user of the transmission.

The invention further discloses a second novel operating method for the continuously variable transmission has been developed, based on any known operating method for determining the axial clamping force Fax, wherein the degree of drive belt slip S can be detected and wherein, if this slip exceeds a critical limit, i.e. in the event of an excessive drive belt slip S, measures are taken to reduce the drive belt slip S. In a further refinement of the invention, the above-mentioned critical limit is related to the maximum permissible degree of drive belt slip S in accordance with the slip characteristic.

In addition to what has been described above, the invention also relates to all details in the figures, at least where they can be directly and unambiguously understood by a person skilled in the art, and to the features described in the set of claims which follows.

### Claims

1. Method for operating a continuously variable transmission provided with two pulleys (1, 2), each provided with two pulley discs (4, 5) which together define a tapering groove and between which a drive belt (3) is clamped with the aid of an axial clamping force Fax for transmitting a torque T supplied to the transmission, during normal operation of the transmission, from one pulley (1) to the other pulley (2) with the aid of friction between the discs (4, 5) and the drive belt (3) and virtually without any movement between them, in which method the axial clamping force Fax is calculated based on the said torque T using an operating parameter, **characterised in that** at any time the above-mentioned normal operation of the transmission is interrupted by an adaptation phase, in which the axial clamping force Fax is reduced to a level Fax-slip at which a given degree of movement, i.e. drive belt slip S, between one of the pulleys (1, 2) and the drive belt (3) occurs and in which the value of the said operating parameter of the transmission is adapted by relating the operating parameter to the said level of the reduced clamping force Fax-slip.

2. Method according to Claim 1, **characterised in that** the operating parameter is a torque transmission coefficient $\tau$ of the transmission, which is representative of the relationship between the torque T supplied and the level of the axial clamping force Fax which is the minimum required for the said torque T supplied to be passed through the transmission virtually without drive belt slip S during normal operation.

3. Method according to Claim 2, **characterised in that** the torque transmission coefficient $\tau$ is given by the equation:

$$\tau = (T \cdot \cos(\tfrac{1}{2}\phi)) / (2 \cdot R \cdot \text{Fax-slip}),$$

where $\phi$ is an angle defined between the tapering pulley discs (4, 5) and R is a running radius of the drive belt (3) between the discs (4, 5) of a pulley (1, 2).

4. Method according to Claim 3, **characterised in that** the exertion of an axial clamping force Fax which is to be applied to the drive belt (3) by a pulley (1, 2) during normal operation is given by the equation:

$$Fax = Sf \cdot (T \cdot \cos(\tfrac{1}{2}\phi)) / (2 \cdot R \cdot \tau),$$

where Sf is a safety factor greater than or equal to 1.

5. Method according to Claim 4, **characterised in that** the safety factor Sf has a value in a range between 1.3 and 1, preferably greater than 1.1.

6. Method according to one of the preceding claims, **characterised in that** during normal operation the axial clamping force Fax to be applied to the drive belt (3) by a pulley (1, 2) during normal operation is determined by multiplying the level of the minimum axial clamping force Fax required for the said torque T supplied to be passed through the transmission virtually without drive belt slip S by a safety factor Sf, the value of which is related to the value for the drive belt slip S which is permissible for the instantaneous transmission ratio of the transmission and the axial clamping force Fax in accordance with the slip characteristic.

7. Method according to one of the preceding claims, **characterised in that** the adaptation is carried out while the transmission ratio of the transmission is at a lowest value, i.e. low ratio, or a highest value, i.e. overdrive ratio.

8. Method according to one of the preceding claims, **characterised in that** in the adaptation phase the degree of drive belt slip S is determined as a function of the difference or ratio between a geometric transmission ratio GR of the transmission and a ratio $\omega_{OUT}/\omega_{IN}$ between the rotational speeds of the respective pulleys (1, 2).

9. Method according to one of the preceding claims, **characterised in that** the said degree of drive belt slip S has an absolute value in a range between 0.5 and 2 m/s, preferably between 1 and 1.5 m/s.

10. Method according to one of the preceding claims, **characterised in that** the transmission is also provided with detection means for determining the geometric transmission ratio GR of the transmission.

11. Continuously variable transmission which is operated in accordance with one or more of the preceding claims.

**Patentansprüche**

1. Verfahren zur Betätigung eines stufenlosen Getriebes, das mit zwei Rollen (1, 2) versehen ist, die jeweils mit zwei Rollenscheiben (4, 5) versehen sind, welche zusammen eine sich verjüngende Nut bilden und zwischen denen mit Hilfe einer axialen Klemmkraft Fax ein Antriebsriemen (3) geklemmt ist, um bei Normalbetrieb des Getriebes mit Hilfe von Reibung zwischen den Scheiben (4, 5) und dem Antriebsriemen (3) praktisch ohne irgendeine Bewegung dazwischen ein dem Getriebe zugeführtes Drehmoment T von einer Rolle (1) auf die andere Rolle (2) zu übertragen, wobei bei dem Verfahren die axiale Klemmkraft Fax auf Grundlage des Drehmoments T unter Verwendung eines Betriebsparameters berechnet wird, **dadurch gekennzeichnet, dass** zu jedem Zeitpunkt der oben genannte Normalbetrieb des Getriebes durch eine Anpassungsphase unterbrochen wird, während der die axiale Klemmkraft Fax auf eine Höhe Fax-Schlupf reduziert wird, auf der ein gegebener Freiheitsgrad, das heißt ein Antriebsriemenschlupf S, zwischen einer der Rollen (1, 2) und dem Antriebsriemen (3) auftritt, und wobei der Wert des Betriebsparameters des Getriebes **dadurch** angepasst wird, dass der Betriebsparameter mit der Höhe der reduzierten Klemmkraft Fax-Schlupf in Beziehung gesetzt wird.

2. Verfahren nach Anspruch 1, **dadurch gekennzeichnet, dass** der Betriebsparameter ein Drehmomentübertragungskoeffizient τ des Getriebes ist, der die Beziehung zwischen dem zugeführten Drehmoment T und der Höhe der axialen Klemmkraft Fax, die die minimal erforderliche ist, um das zugeführte Drehmoment T bei Normalbetrieb praktisch ohne Antriebsriemenschlupf S durch das Getriebe zu leiten, darstellt.

3. Verfahren nach Anspruch 2, **dadurch gekennzeichnet, dass** der Drehmomentübertragungskoeffizient τ durch die folgende Gleichung gegeben wird:

$$\tau = (T \cdot \cos (1/2\phi)) / (2 \cdot R \cdot Fax\text{-}Schlupf),$$

wobei φ ein zwischen den sich verjüngenden Rollenscheiben (4, 5) definierter Winkel und R ein Rollradius des Antriebsriemens (3) zwischen den Scheiben (4, 5) der Rolle (1, 2) ist.

4. Verfahren nach Anspruch 3, **dadurch gekennzeichnet, dass** die Ausübung einer axialen Klemmkraft Fax, die bei Normalbetrieb durch eine Rolle (1, 2) an den Antriebsriemen (3) angelegt werden soll, durch die folgende Gleichung gegeben wird:

$$Fax = Sf \cdot (T \cdot \cos (1/2\phi)) \ / \ (2 \cdot R \cdot \tau),$$

wobei Sf ein Sicherheitsfaktor größer gleich 1 ist.

5. Verfahren nach Anspruch 4, **dadurch gekennzeichnet, dass** der Sicherheitsfaktor Sf einen Wert in einem Bereich zwischen 1,3 und 1, vorzugsweise über 1,1, besitzt.

6. Verfahren nach einem der vorhergehenden Ansprüche, **dadurch gekennzeichnet, dass** bei Normalbetrieb die axiale Klemmkraft Fax, die bei Normalbetrieb durch eine Rolle (1, 2) an den Antriebsriemen (3) angelegt werden soll, durch Multiplikation der Höhe der minimalen axialen Klemmkraft Fax, die dazu erforderlich ist, dass das zugeführte Drehmoment T praktisch ohne Antriebsriemenschlupf S durch das Getriebe geleitet wird, mit einem Sicherheitsfaktor Sf, dessen Wert mit dem Wert für den Antriebsriemenschlupf S, der für das Augenblicksübersetzungsverhältnis des Getriebes zulässig ist, und der axialen Klemmkraft Fax gemäß der Schlupfcharakteristik in Beziehung steht, bestimmt wird.

7. Verfahren nach einem der vorhergehenden Ansprüche, **dadurch gekennzeichnet, dass** die Anpassung durchgeführt wird, während sich das Übersetzungsverhältnis des Getriebes auf dem niedrigsten Wert, das heißt niedrige Gangstufe, oder auf dem höchsten Wert, das heißt Overdrive-Gangstufe, befindet.

8. Verfahren nach einem der vorhergehenden Ansprüche, **dadurch gekennzeichnet, dass** die Anpassungsphase des Grads des Antriebsriemenschlupfes S als Funktion der Differenz oder des Verhältnisses zwischen einem geometrischen Übersetzungsverhältnis GR des Getriebes und einem Verhältnis $\omega_{OUT}/\omega_{IN}$ zwischen den Drehzahlen der jeweiligen Rollen (1, 2) bestimmt wird.

9. Verfahren nach einem der vorhergehenden Ansprüche, **dadurch gekennzeichnet, dass** der Grad des Antriebsriemenschlupfes S einen absoluten Wert in einem Bereich zwischen 0,5 und 2 m/s, vorzugsweise zwischen 1 und 1,5 m/s, aufweist.

10. Verfahren nach einem der vorhergehenden Ansprüche, **dadurch gekennzeichnet, dass** das Getriebe des weiteren mit einem Erfassungsmittel zur Bestimmung des geometrischen Übersetzungsverhältnisses GR des Getriebes versehen ist.

11. Stufenloses Getriebe, das gemäß einem oder mehreren der vorhergehenden Ansprüche betätigt wird.

**Revendications**

1. Procédé pour faire fonctionner une transmission à variation continue équipée de deux poulies (1, 2), chacune équipée de deux disques de poulie (4, 5) qui définissent ensemble une gorge trapézoïdale et entre lesquels une courroie de transmission (3) est serrée à l'aide d'une force de serrage axiale Fax pour transmettre un couple T appliqué à la transmission, pendant le fonctionnement normal de la transmission, d'une poulie (1) à l'autre poulie (2) grâce au frottement entre les disques (4, 5) et la courroie de transmission (3) et pratiquement sans aucun mouvement entre eux, procédé selon lequel on calcule la force de serrage axiale Fax en fonction dudit couple T en utilisant un paramètre de fonctionnement, **caractérisé en ce qu'**à tout moment le fonctionnement normal susmentionné de la transmission est interrompu par une phase d'adaptation, pendant laquelle on réduit la force de serrage axiale Fax à un niveau Fax-slip auquel se produit une quantité donnée de mouvement, c'est-à-dire un glissement S de la courroie de transmission, entre une des poulies (1, 2) et la courroie de transmission (3) et pendant laquelle on adapte la valeur dudit paramètre de fonctionnement de la transmission en établissant un rapport entre le paramètre de fonctionnement et ledit niveau de la force de serrage réduite Fax-slip.

2. Procédé selon la revendication 1, **caractérisé en ce que** le paramètre de fonctionnement est un coefficient $\tau$ de transmission de couple de la transmission, qui est représentatif de la relation entre le couple T appliqué et le niveau de la force de serrage axiale Fax qui est le minimum requis pour faire passer ledit couple T appliqué par la transmission pratiquement sans glissement S de la courroie de transmission en fonctionnement normal.

**3.** Procédé selon la revendication 2, **caractérisé en ce que** le coefficient $\tau$ de transmission de couple est donné par l'équation :

$$\tau = (T.cos[\tfrac{1}{2}\Phi])/(2.R.Fax-slip),$$

où $\Phi$ est l'angle défini par les faces d'appui des disques de poulie (4, 5) et R est le rayon courant de la courroie de transmission (3) entre les disques (4, 5) d'une poulie (1, 2).

**4.** Procédé selon la revendication 3, **caractérisé en ce que** la force de serrage axiale Fax exercée qu'une poulie (1, 2) doit appliquer à la courroie de transmission (3) pendant le fonctionnement normal est donnée par l'équation :

$$Fax = Sf.(T.cos[\tfrac{1}{2}\Phi])/(2.R.\tau),$$

où Sf est un coefficient de sécurité supérieur ou égal à 1.

**5.** Procédé selon la revendication 4, **caractérisé en ce que** le coefficient de sécurité Sf a une valeur comprise entre 1,3 et 1, de préférence supérieure à 1, 1 .

**6.** Procédé selon l'une quelconque des revendications précédentes, **caractérisé en ce que** pendant le fonctionnement normal on détermine la force de serrage axiale Fax qu'une poulie (1, 2) doit appliquer à la courroie de transmission (3) pendant le fonctionnement normal en multipliant la valeur de la force de serrage axiale Fax minimale requise pour faire passer ledit couple T appliqué par la transmission pratiquement sans glissement S de la courroie de transmission par un coefficient de sécurité Sf, dont la valeur est en rapport avec la valeur du glissement S de la courroie de transmission qui est admissible pour le rapport de transmission instantané de la transmission et la force de serrage axiale Fax conformément à la caractéristique de glissement.

**7.** Procédé selon l'une quelconque des revendications précédentes, **caractérisé en ce que** l'adaptation s'effectue alors que le rapport de transmission de la transmission est à sa valeur la plus faible, c'est-à-dire le rapport court, ou à sa valeur la plus élevée, c'est-à-dire le rapport de surmultipliée.

**8.** Procédé selon l'une quelconque des revendications précédentes, **caractérisé en ce que** pendant la phase d'adaptation on détermine la valeur du glissement S de la courroie de transmission comme étant une fonction de la différence ou du rapport entre un rapport de transmission géométrique GR de la transmission et un rapport $\omega_{OUT}/\omega_{IN}$ entre les vitesses de rotation respectives des poulies (1, 2).

**9.** Procédé selon l'une quelconque des revendications précédentes, **caractérisé en ce que** ladite valeur du glissement S de la courroie de transmission a une valeur absolue comprise entre 0,5 et 2 m/s, de préférence entre 1 et 1,5 m/s.

**10.** Procédé selon l'une quelconque des revendications précédentes, **caractérisé en ce que** la transmission est aussi équipée de moyens de détection pour déterminer le rapport de transmission géométrique GR de la transmission.

**11.** Transmission à variation continue que l'on fait fonctionner conformément à une ou plusieurs des revendications précédentes.

**FIG. 1**

**FIG. 2**

**FIG. 3**

**EP 1 579 128 B1**

**Patent documents cited in the description**

- EP 1167839 A
- EP 1218654 A
- EP 1069331 A
- EP 0626526 A